# EUROPÄISCHE PATENTSCHRIFT

(11) **EP 2 108 253 B1**
(45) Veröffentlichungstag und Bekanntmachung des Hinweises auf die Patenterteilung: **27.06.2012**
(21) Anmeldenummer: 09157359.2
(22) Anmeldetag: 06.04.2009
(51) Int. Cl.: A01J 7/02

(54) **Verfahren zum Reinigen einer Melkanlage**
Method for cleaning a milking assembly
Procédé de nettoyage d'une installation de traite

(30) Priorität: 07.04.2008 DE 102008017724
(43) Veröffentlichungstag der Anmeldung: 14.10.2009
(73) Patentinhaber: GEA WestfaliaSurge GmbH, 59199 Bönen (DE)
(72) Erfinder: Frenser, Reinhard, 33378 Rheda-Wiedenbrück (DE); Troppmann, Thomas, 48336 Sassenberg (DE); Bretländer, Ralf, 59071 Hamm (DE)
(74) Vertreter: Neumann, Ditmar

(56) Entgegenhaltungen:
- EP-A- 1 579 758
- WO-A-03/024202
- US-A- 5 167 201
- US-A- 5 405 452
- US-A- 5 896 828

## Beschreibung

Der Gegenstand der Erfindung bezieht sich auf ein Verfahren zum Reinigen einer Melkanlage sowie auf eine Melkanlage zum Melken von Milch abgebenden Tieren, insbesondere Schafen, Ziegen, Kühen. Eine Melkanlage gemäß dem Oberbegriff von Anspruch 10 und ein entsprechendes Verfahren sind aus US 5 896 828 bekannt.

Zum Melken von Milch abgebenden Tieren sind Melkanlagen bekannt, die eine Mehrzahl von Melkplätzen aufweisen. Jeder Melkplatz ist mit einer Anzahl von Melkbechern ausgestattet. Die Anzahl der Melkbecher ist abhängig von der Anzahl der Zitzen des zu melkenden Tieres. Die Melkbecher sind mittelbar oder unmittelbar mit einer Milchtransportleitung verbunden. In der Milchtransportleitung wird die ermolkene Milch eines jeden Melkplatzes zu einem Milchtank geführt.

Die Melkbecher werden an die Zitzen des Tieres angebracht. Die Anbringung der Melkbecher kann robotergestützt erfolgen. Es ist auch bekannt, dass Melkbecher manuell an die Zitzen des Tieres angebracht werden. Auch eine halbautomatische Anbringung der Melkbecher ist möglich. Es ist bekannt, dass Mehrplatz-Melksysteme unterschiedlich ausgestaltet sein können. So kann ein Mehrplatz-Melksystem Melkplätze aufweisen, die ortsfest angeordnet sind. Die Anordnung kann beispielsweise so erfolgen, dass eine Mehrzahl von Melkplätzen im Wesentlichen entlang eines Arbeitsbereichs angeordnet ist. Bei dem Arbeitsbereich kann es sich um eine sogenannte Melkergrube handeln. Es ist auch bekannt, dass Melkplätze beidseits der Melkergrube vorgesehen sind. Ein jeder Melkplatz kann mit einem eigenständigen Melkzeug, das heißt mit einer bestimmten Anzahl von Melkbechern ausgestattet sein. Es sind jedoch auch Ausgestaltungen bekannt, bei denen ein Melkzeug von der einen Seite der Melkgrube zu der anderen Seite der Melkergrube bewegt wird, so dass die Anzahl der Melkzeuge der Hälfte der Anzahl der Melkplätze entspricht.

Es ist bekannt, dass die Zitzenbecher sowie das mit den Zitzenbechern verbundene Milchführungssystem gereinigt werden. Durch die Reinigung des Milchführungssystems soll sichergestellt werden, dass die Hygieneanforderungen für das Nahrungsmittel Milch erfüllt werden. Darüber hinaus soll vermieden werden, dass es in dem milchführenden System zu Ablagerungen von Milchbestandteilen kommt, welche auch zu einer strömungstechnischen Beeinträchtigung innerhalb des Milchführungssystems führen können.

Durch die EP 0 682 862 A1 ist beispielsweise eine Vorrichtung bekannt, mittels der die Melkbecher einzeln gereinigt werden. Hierzu ist ein rohrförmiges Element vorgesehen, welches in den Melkbecher eingebracht wird. Durch das rohrförmige Element strömt insbesondere eine Reinigungsflüssigkeit in den Melkbecher.

Durch die Druckschrift US 5,405,452 sind ein Verfahren sowie eine Vorrichtung zum Reinigen einer Melkanlage bekannt. Nach dem Melkvorgang erfolgt eine Reinigung. In einem ersten Schritt wird die in dem Leitungssystem noch vorhandene Milch abgeleitet. In einem zweiten Schritt wird eine Reinigung mit einer Reinigungsflüssigkeit durchgeführt. Die Reinigungsflüssigkeit kann auch vorgewärmt sein, um einen verbesserten Reinigungseffekt zu erreichen. Die Reinigung erfolgt derart, dass die Melkzeuge in eine Wanne mit einer Flüssigkeit, insbesondere einer Reinigungsflüssigkeit, teilweise eingetaucht werden, so dass durch das in dem Leitungssystem vorhandene Vakuum die Reinigungsflüssigkeit durch das Melkzeug angesaugt wird.

Eine weitere Ausführungsform eines Verfahrens und einer Vorrichtung zum Reinigen des milchführenden Leitungssystems ist durch die EP 0 761 091 A1 bekannt. Nach dem dort beschriebenen Verfahren wird vorgeschlagen, dass eine Reinigungsflüssigkeit in dem milchführenden Leitungssystem sowie dem Melkzeug im Kreislauf geführt wird. Die Reinigung wird dann beendet, wenn die Reinigungsflüssigkeit eine bestimmte elektrische Leitfähigkeit aufweist.

Die Reinigungsflüssigkeit kann Wasser sein. Es ist auch bekannt, dass zum Reinigen von Melkanlagen wässrige saure Lösungen verwendet werden. Auch alkalische Reinigungslösungen sind zum Reinigen von Melkanlagen bekannt. Durch die WO 99/39568 ist darüber hinaus bekannt, dass neben einer sauren Reinigungslösung keine alkalische Reinigungslösung eingesetzt wird.

Der Reinigungsvorgang kann eine Mehrzahl einzelner Schritte mit unterschiedlicher Funktionalität beinhalten. Der Spülautomat EnviStar der Firma Westfalia-Surge, Bönen, arbeitet in der Weise, dass zunächst ein Vorspülen mit gebrauchter Spül- und Desinfektionslösung erfolgt. Eine wässrige Reinigungslösung wird auf eine erhöhte Temperatur, insbesondere auf 85 °C gebracht, die zur Reinigung in das Leitungssystem eingebracht wird. Es erfolgt ein Zwischenspülen mit Leitungswasser. Dem Zwischenspülvorgang schließt sich ein Desinfektionsvorgang an, bei dem eine Desinfektionslösung in das milchführende Leitungssystem eingebracht wird. Zum Durchspülen nach dem Desinfektionsvorgang wird Leitungswasser verwendet.

Hiervon ausgehend liegt der vorliegenden Erfindung die Zielsetzung zugrunde, ein verbessertes Reinigungsverfahren anzugeben.

Diese Aufgabe wird erfindungsgemäß durch ein Verfahren zum Reinigen einer Melkanlage mit den Merkmalen des Anspruchs 1 vorgeschlagen. Vorteilhafte Weiterbildungen und Ausgestaltungen des Verfahrens sind Gegenstand der Unteransprüche.

Das erfindungsgemäße Verfahren dient zum Reinigen einer Melkanlage umfassend wenigstens eine Milchtransportleitung, wenigstens eine Fluidleitung, eine Mehrzahl von Melkplätzen, wobei ein jeder Melkplatz wenigstens einen Melkbecher aufweist, der unmittelbar oder mittelbar mit der Milchtransportleitung verbunden und mit der Fluidleitung verbindbar ist. Des Weiteren ist bei der Melkanlage eine Reinigungseinrichtung vorgesehen, die mit der Fluidleitung verbunden ist. Die Fluidleitung weist wenigstens zwei Abschnitte auf. Jedem Abschnitt der Fluidleitung ist wenigstens ein Melkplatz zugeordnet. Der wenigstens eine Melkbecher des Melkplatzes ist mit dem betreffenden Abschnitt verbindbar. Ein gasförmiges Fluid wird entweder in den einen Abschnitt oder in den weiteren Abschnitt eingeleitet. Durch das gasförmige Fluid wird eine Trocknung der milchführenden Leitungen und Schläuche der Melkanlage erreicht. Insbesondere am Ende eines Reinigungsprozesses, der einen Nachspülvorgang mit Wasser beinhaltet, verbleibt Restwasser in den milchführenden Teilen der Melkanlage. Um dieses heraus zu bekommen, wird ein gasförmiges Fluid durch die Leitungen und Schläuche, welche milchführend sind, hindurch geleitet. Das Hindurchführen des gasförmigen Fluids wird durch Vakuum der Melkanlage erreicht. Dadurch, dass lediglich ein Teil der Melkplätze und somit auch der zu diesen Melkplätzen gehörenden milchführenden Schläuche, Leitungen oder dergleichen mit dem Fluid beaufschlagt werden, wird erreicht, das ein Zusammenbruch des Vakuums vermieden wird. Das erfindungsgemäße Verfahren hat auch den Vorteil, dass das Restwasser im Wesentlichen aus der Melkanlage entfernt wird. Hierdurch wird die Milchqualität erhöht, da kein Restwasser in den Milchtank der Melkanlage gelangt.

Für eine weiter verbesserte Verfahrensführung des erfindungsgemäßen Verfahrens wird vorgeschlagen, dass das gasförmige Fluid abwechselnd in den einen oder in den anderen Abschnitt eingeleitet wird. Das gasförmige Fluid kann stoßartig in die Melkanlage eingeleitet werden, so dass eine noch weitere Verbesserung erreicht wird. Dadurch, dass das Restwasser im Wesentlichen aus der Melkanlage entfernt wird, wird auch der Gefrierpunkt verringert. Die Dauer eines Luftstoßes kann bis zu 10 sek. betragen.

Weist die Melkanlage eine Vielzahl von Melkplätzen, beispielsweise 100 Melkplätze auf, so können auch mehrere Abschnitte vorgesehen sein, beispielsweise 5 Abschnitte mit jeweils 20 Melkplätzen, wobei die einzelnen Abschnitte oder auch gruppenweise Abschnitte mit dem gasförmigen Fluid beaufschlagbar sind.

Bevorzugt ist ein Verfahren, bei dem das gasförmige Fluid Luft ist.

Zu einer noch weiteren Verbesserung des Ergebnisses der Trocknung wird vorgeschlagen, dass das gasförmige Fluid vor dem Einleiten in die Melkanlage getrocknet wird. Insbesondere wird vorgeschlagen, dass das Fluid vor dem Einleiten eine relative Feuchte von höchstens 80 %, insbesondere 50 %, vorzugsweise 30 % aufweist.

Um eine Dekontamination des Milchleitungssystems der Melkanlage bei Einleitung von Luft zu vermeiden, wird nach einer noch weiteren vorteilhaften Ausgestaltung des Verfahrens vorgeschlagen, dass das Fluid vor dem Einleiten in die Melkanlage gefiltert wird.

Nach einer noch weiteren vorteilhaften Ausgestaltung des erfindungsgemäßen Verfahrens wird vorgeschlagen, dass das Fluid unter einem vorgegebenen Druck, der mindestens dem Atmosphärendruck entspricht, eingeleitet wird.

Die Dauer der Trocknung kann in Abhängigkeit von dem gewünschten Trocknungsgrad eingestellt werden. Es wird vorgeschlagen, dass die Feuchte des Fluids nach einem Durchströmen des wenigstens einen Melkbechers unmittelbar oder mittelbar bestimmt wird. Die Bestimmung der Feuchte des gasförmigen Fluids kann auch am Ausgang des Fluids bestimmt werden. In Abhängigkeit von dem Ergebnis der Bestimmung der Feuchte kann der Trocknungsvorgang beendet werden. Gegebenenfalls werden die Umgebungseinflüsse wie relative Luftfeuchte und Temperatur bei der Entscheidung darüber, ob ein ausreichender Trocknungsgrad erreicht worden ist, berücksichtigt werden. Die Feuchte kann mittels entsprechender Sensorik ermittelt werden. Die Sensorik ist mit einer Auswertereinrichtung verbunden, die ihrerseits mit einer Steuerung der Reinigungseinrichtung der Melkanlage verbunden ist, und die das Einleiten des gasförmigen Fluids steuert.

Nach einem noch weiteren erfinderischen Gedanken wird eine Melkanlage, umfassend wenigstens eine Milchtransportleitung, wenigstens eine Fluidleitung, eine Mehrzahl von Melkplätzen, wobei ein jeder Melkplatz wenigstens einen Melkbecher aufweist, der unmittelbar oder mittelbar mit der Milchtransportleitung verbunden und mit der Fluidleitung verbindbar ist, und eine Reinigungseinrichtung, die mit der Fluidleitung verbunden ist, vorgeschlagen, die sich dadurch auszeichnet, dass die Fluidleitung wenigstens zwei Abschnitte aufweist. Einem jeden Abschnitt ist jeweils wenigstens ein Melkplatz derart zugeordnet, dass der wenigstens eine Melkbecher des Melkplatzes mit dem betreffenden Abschnitt verbindbar ist. Die Melkanlage zeichnet sich darüber hinaus dadurch aus, dass Mittel vorgesehen sind, durch welche wenigstens ein Abschnitt unabhängig von dem wenigstens einem weiteren Abschnitt mit einem gasförmigen Fluid beaufschlagbar ist.

Durch eine solche Ausgestaltung der Melkanlage wird erreicht, dass einerseits eine Trocknung der milchführenden Leitungen, Schläuche oder dergleichen der Melkanlage effektiv erreicht wird. Andererseits wird durch die erfindungsgemäße Melkanlage erreicht, dass keine oder nur sehr geringe Vakuumeinbrüche der Vakuumeinrichtung der Melkanlage eintreten, wenn das gasförmige Fluid durch die Melkanlage hindurchgeführt wird.

Bei den gasförmigen Fluid handelt es sich vorzugsweise um Luft.

Nach einer weiteren vorteilhaften Ausgestaltung der Melkanlage wird vorgeschlagen, dass eine Trocknungseinheit zum Trocknen des Fluids vorgesehen ist. Hierdurch wird eine noch weitere effektivere Trocknung der milchführenden Leitungen, Schläuche oder dergleichen der Melkanlage erreicht.

Wird Luft durch die Melkanlage hindurchgeströmt, so ist es zweckmäßig und vorteilhaft, eine Filtereinheit vorzusehen, durch welche das Fluid gefiltert wird.

In vorteilhafter Weise ist die Melkanlage so ausgebildet, dass Mittel vorgesehen sind, welche so ausgebildet sind, dass die Feuchte des Fluids nach einem Durchströmen des wenigstens einem Melkbechers mittelbar oder unmittelbar bestimmbar ist.

Das Fluid wird durch wenigstens einen Abschnitt unabhängig von dem wenigstens einen weiteren Abschnitt durch die Melkanlage strömen. Um die Abschnitte selektiv anzusteuern, sind Mittel vorgesehen. Die Mittel umfassen vorzugsweise Ventile. Die Ventile sind bevorzugt elektromagnetisch oder pneumatisch betätigbare Ventile. Die Betätigung kann auch mittels des in der Anlage vorhandenen Vakuums erfolgen, so dass die Ventile über ein entsprechendes Steuervakuum gesteuert werden. Hierzu ist die Melkanlage vorzugsweise mit einer Steuerung ausgestattet.

Der Gegenstand der Erfindung ist insbesondere für Melkanlagen geeignet, die zwei Melkbereiche aufweisen, wobei zwischen den Melkbereichen ein Gang ausgebildet ist. Ein solcher Gang wird auch als Melkergrube bezeichnet. Von dieser Grube aus kann ein Melker die Melkbecher an die Zitzen der Tiere ansetzen. In doppelt bestückten Melkanlagen, dass heißt bei Melkanlagen, in denen für die beiden Bereiche Melkzeuge vorhanden sind, kommt es vor, dass die Tiere in den beiden Melkbereichen gleichzeitig mit dem Melken fertig sind und nun gleichzeitig hinaus gelassen werden müssten. Zugleich sollen dann auch die nachfolgenden Kühe in beiden Melkbereichen gleichzeitig in die Melkbereiche kommen, angerüstet und gemolken werden.

Weitere Einzelheiten und Vorteile der Erfindung werden anhand des in der Zeichnung dargestellten Ausführungsbeispiels erläutert, ohne dass der Gegenstand der Erfindung auf dieses konkrete Ausführungsbeispiel beschränkt wird.

Es zeigen:
- Figur 1:: schematisch eine Melkanlage und

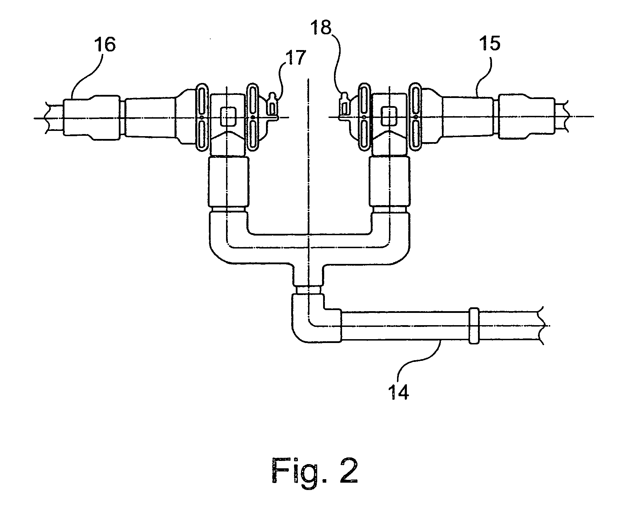

- Figur 2:: schematisch vergrößert eine Einzelheit der Melkanlage nach Figur 1

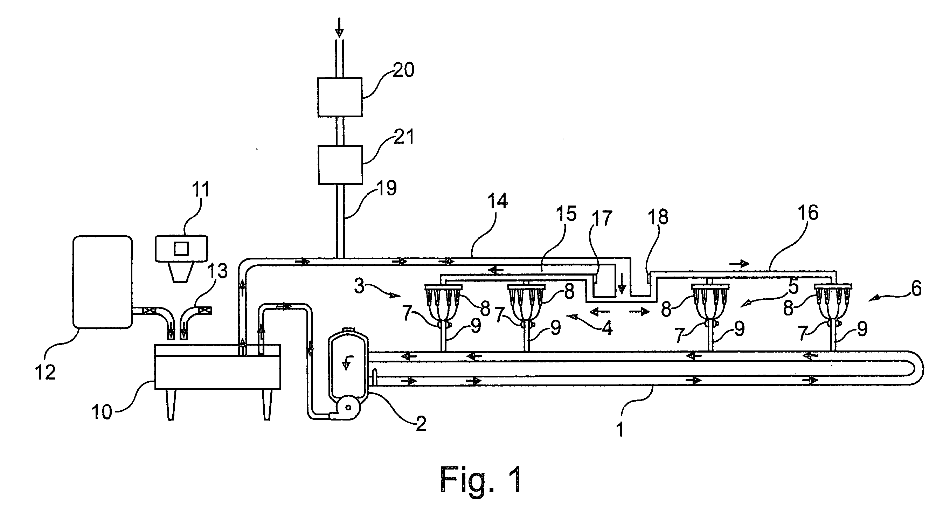

In der Figur 1 ist schematisch eine Melkanlage dargestellt. Die Melkanlage weist eine Milchtransportleitung 1 auf. Die Milchtransportleitung 1 ist mit einer Milchfördereinrichtung 2 verbunden. Repräsentativ für Melkplätze sind in der Figur 1 Melkzeuge 3, 4, 5 und 6 dargestellt. Jedes Melkzeug weist Melkbecher 8 auf, die mit einem Milchsammelstück 7 verbunden sind. Die jeweiligen Milchsammelstücke 7 sind über Milchschläuche 9 mit der Milchtransportleitung 1 verbunden.

Während eines Melkvorgangs werden die Melkbecher 8 an die Zitzen der Tiere angesetzt. Die ermolkene Milch gelangt aus dem Melkbechern 8 über das jeweilige Milchsammelstück 7 durch den Milchschlauch 9 in die Milchtransportleitung 1. Hierzu liegt ein entsprechende Vakuum in dem Milchtransportsystem an. Nicht dargestellt ist die Vakuumerzeugungseinheit, welche zur Erzeugung des Melkvakuums sowie des Pulsationsvakuums dient. Die Milch wird über die Milchfördereinrichtung 2 in einen nicht dargestellten Milchtank geführt.

Die in der Figur 1 dargestellte Melkanlage weist eine Reinigungseinrichtung auf. Die Reinigungseinrichtung umfasst eine Wanne 10, in der sich eine Reinigungsflüssigkeit befindet. Zum Bereitstellen einer Reinigungsflüssigkeit ist eine Dosier-und Steuereinrichtung 11 vorgesehen. Mit dem Bezugszeichen 12 ist eine Einheit gekennzeichnet, die zur Bereitstellung einer Flüssigkeit auf einem erhöhten Temperaturniveau geeignet ist. Hierbei kann es sich beispielsweise um einen elektrisch beheizbaren Boiler handeln. Das Bezugszeichen 13 kennzeichnet einen Wasserzulauf.

Mit der Wanne 10 ist eine Fluidleitung 14 verbunden. Die Fluidleitung 14 weist zwei Abschnitte 15, 16 auf. Mit dem Abschnitt 15 sind die Melkbecher 8 der Melkzeuge 3 und 4 verbunden. Mit dem zweiten Abschnitt 16 sind die Melkbecher 8 der Melkzeuge 5 und 6 verbunden. Hierzu weisen die Abschnitte 15, 16 entsprechende Aufnahmen auf, die so ausgebildet sind, dass vorzugsweise eine fluiddichte Verbindung zwischen diesen Aufnahmen und den Köpfen der Melkbecher erreicht wird.

Ist der Melkvorgang beendet, so ist das Milchleitungssystem im Wesentlichen frei von Milch. Zum Durchführen eines Reinigungsvorgangs werden die Melkbecher 8 mit den Abschnitten 15, 16 verbunden. Durch ein in der Milchfördereinrichtung 2 vorhandenes Vakuum wird die Reinigungsflüssigkeit, die sich in der Wanne 10 befmdet, in die Fluidleitung 14 angesaugt. Von der Fluidleitung 14 kann die Flüssigkeit entweder in den Abschnitt 15 oder in den Abschnitt 16 geleitet werden. Hierzu sind entsprechende Ventile 17, 18 vorgesehen. Die Ventile 17, 18 können auch beide geöffnet sein, so dass die Reinigungsflüssigkeit sowohl in den Abschnitt 15 als auch in den Abschnitt 16 geleitet wird.

Nach Beendigung der Reinigung mittels einer Flüssigkeit wird über die Fluidleitung 14 Luft angesaugt. Schematisch ist eine Luftleitung 19 dargestellt, die mit der Fluidleitung 14 verbunden ist. Vorzugsweise ist das in die Wanne der Fluidleitung 14 hineinragende Ende oder in dem Abschnitt zwischen dem Ende der Fluidleitung 14 und der Luftleitung 19 ein Ventil, welches nicht dargestellt ist, vorgesehen, so dass keine zusätzliche Luft angesaugt wird. Die Luft durchströmt eine Filtereinheit 20 sowie eine Trocknungseinheit 21, bevor die Luft in die Fluidleitung 14 gelangt. Die Ventile 17, 18 sind so geschaltet, dass entweder lediglich der Abschnitt 15 oder der Abschnitt 16 mit der Fluidleitung 14 verbunden ist. Ist das Ventil 17 geschlossen und das Ventil 18 geöffnet, so strömt die Luft durch die Fluidleitung 14 in den Abschnitt 15. Vom Abschnitt 15 aus durchströmt die Luft die Melkbecher 8, die Sammelstücke 7 und die Milchschläuche 9 und gelangt in die Milchtransportleitung 1. Die angesaugte Luft wird vorzugsweise stoßweise angesaugt. Nicht dargestellt sind Mittel, welche beispielsweise im Bereich der Milchtransportleitung 1 angeordnet sind, durch die mittelbar oder unmittelbar die Feuchte der Luft nach Durchströmen der Melkzeuge ermittelt wird.

Wird der gewünschte Trocknungsgrad erreicht, so wird das Ventil 18 geschlossen und das Ventil 17 geöffnet. Die Luft strömt in den Abschnitt 15 der Fluidleitung 14 und gelangt über das Melkzeug 3, 4 in die Milchtransportleitung 1.

Die Ventile 17, 18 sind über eine nicht dargestellte Steuerung steuerbar.

Die in der Figur 1 dargestellte Melkanlage dient der Verdeutlichung der Erfindung. Die Anzahl der Melkplätze kann entsprechend groß sein. Die Melkplätze können in Gruppen unterteilt werden, die jeweils über einen gesonderten Abschnitt der Fluidleitung verfügen. Die Abschnitte können einzeln oder auch in Gruppen mit der Fluidleitung 14 verbunden werden.

Durch die erfindungsgemäße Verfahrensführung sowie die erfindungsgemäße Ausgestaltung der Melkanlage wird erreicht, dass Vakuumeinbrüche, die durch das Einleiten der Luft in die Melkanlage entstehen können, auf ein Minimum reduziert werden.

### Bezugszeichenliste

- 1: Milchtransportleitung
- 2: Milchfördereinrichtung
- 3 - 6: Melkzeug
- 7: Milchsammelstück
- 8: Melkbecher
- 9: Milchschlauch
- 10: Wanne
- 11: Dosier- und Steuereinrichtung
- 12: Einheit
- 13: Kaltwasserleitung
- 14: Fluidleitung
- 15: Abschnitt
- 16: Abschnitt
- 17: Ventil
- 18: Ventil
- 19: Luftleitung
- 20: Filtereinheit
- 21: Trocknungseinheit

## Patentansprüche

1. Verfahren zum Reinigen einer Melkanlage umfassend wenigstens eine Milchtransportleitung (1), wenigstens eine Fluidleitung (14), eine Mehrzahl von Melkplätzen, wobei ein jeder Melkplatz wenigstens einen Melkbecher (8) aufweist, der unmittelbar oder mittelbar mit der Milchtransportleitung (1) verbunden und mit der Fluidleitung (14) verbindbar ist, und eine Reinigungseinrichtung (10, 11, 12, 13), die mit der Fluidleitung (14) verbunden ist, wobei die Fluidleitung (14) wenigstens zwei Abschnitte (15, 16) aufweist und einem jeden Abschnitt (15, 16) jeweils wenigstens ein Melkplatz derart zugeordnet ist, dass der wenigstens eine Melkbecher (8) des Melkplatzes mit dem betreffenden Abschnitt (15, 16) verbindbar ist, bei dem ein gasförmiges Fluid entweder in den einen Abschnitt (15) oder in den anderen Abschnitt (16) eingeleitet wird.

2. Verfahren nach Anspruch 1, bei dem das Fluid abwechselnd in den einen oder in den anderen Abschnitt (15, 16) eingeleitet wird.

3. Verfahren nach Anspruch 1 oder 2, bei dem das Fluid in eine Anzahl der Abschnitte (15, 16) eingeleitet wird, die kleiner ist als die Gesamtzahl der Abschnitte (15, 16).

4. Verfahren nach Anspruch 1, 2 oder 3, bei dem das gasförmige Fluid Luft ist.

5. Verfahren nach Anspruch 4, bei dem das Fluid vor dem Einleiten getrocknet wird.

6. Verfahren nach Anspruch 4 oder 5, **dadurch gekennzeichnet, dass** das Fluid vor dem Einleiten eine relative Feuchte von höchsten 80 %, insbesondere 50 %, vorzugsweise 30 % aufweist.

7. Verfahren nach Anspruch 4, 5 oder 6, bei dem das Fluid vor dem Einleiten gefiltert wird.

8. Verfahren nach wenigstens einem der Ansprüche 4 bis 7, bei dem das Fluid unter einem vorgegebenen Druck, der entweder dem Atmosphärendruck entspricht oder höher als der Atmosphärendruck ist, eingeleitet wird.

9. Verfahren nach wenigstens einem der vorhergehenden Ansprüche 4 bis 8, bei dem die Feuchte des Fluids nach einem Durchströmen des wenigstens eines Melkbechers (8) mittel oder unmittelbar bestimmt wird.

10. Melkanlage umfassend
wenigstens eine Milchtransportleitung (1),
wenigstens eine Fluidleitung (14),
eine Mehrzahl von Melkplätzen, wobei ein jeder Melkplatz wenigstens einen Melkbecher (8) aufweist, der unmittelbar oder mittelbar mit der Milchtransportleitung (1) verbunden und mit der Fluidleitung (14) verbindbar ist,
und eine Reinigungseinrichtung (10, 11, 12, 13), die mit der Fluidleitung (14) verbunden ist, wobei
die Fluidleitung (14) wenigstens zwei Abschnitte (15, 16) aufweist, die miteinemgasförmigen Fluid beaufschlagbar sind,
**dadurch gekennzeichnet, dass** dass ein jeder Abschnitt (15, 16) jeweils wenigstens einem Melkplatz derart zugeordnet ist, dass der wenigstens eine Melkbecher (8) des Melkplatzes mit dem betreffenden Abschnitt (15, 16) verbindbar ist, und dass Mittel (17, 18) vorgesehen sind, durch welche wenigstens ein Abschnitt (15) unabhängig von dem wenigstens einen weiteren Abschnitt (16) mit dem gasförmigen Fluid beaufschlagbar ist.

11. Melkanlage nach Anspruch 10, **dadurch gekennzeichnet, dass** das Fluid Luft ist.

12. Melkanlage nach Anspruch 10 oder 11, **dadurch gekennzeichnet, dass** eine Trocknungseinheit (21) zum Trocknen des Fluid vorgesehen ist.

13. Melkanlage nach Anspruch 10, 11 oder 12, **dadurch gekennzeichnet, dass** eine Filtereinheit (20) vorgesehen ist, durch welche das Fluid gefiltert wird.

14. Melkanlage nach wenigstens einem der vorhergehenden Ansprüche 10 bis 13, **dadurch gekennzeichnet, dass** Mittel vorgesehen sind, welche so ausgebildet sind, dass die Feuchte des Fluids nach einem Durchströmen des wenigstens eines Melkbechers (8) mittelbar oder unmittelbar bestimmbar ist.

15. Melkanlage nach einem der Ansprüche 10 bis 14, **dadurch gekennzeichnet, dass** die Mittel (17, 18) Ventile umfassen.

16. Melkanlage nach Anspruch 15, **dadurch gekennzeichnet, dass** die Ventile elektromagnetisch oder pneumatische betätigbar sind.

17. Melkanlage nach wenigstens einem der vorhergehenden Ansprüche 10 bis 16, **dadurch gekennzeichnet, dass** eine Steuerung vorgesehen ist, mittels derer auch die Mittel (17, 18) gesteuert werden.

## Claims

1. Method for cleaning a milking assembly comprising at least one milk transport line (1), at least one fluid line (14), a plurality of milking stations, wherein each milking station has at least one teat cup (8) which is connected directly or indirectly to the milk transport line (1) and is connectable to the fluid line (14), and a cleaning device (10, 11, 12, 13) which is connected to the fluid line (14), wherein the fluid line (14) has at least two sections (15, 16) and each section (15, 16) is in each case assigned at least one milking station in such a manner that the at least one teat cup (8) of the milking station is connectable to the relevant section (15, 16), wherein a gaseous fluid is introduced either into the one section (15) or into the other section (16).

2. Method according to Claim 1, in which the fluid is introduced alternately into the one or into the other section (15, 16).

3. Method according to Claim 1 or 2, in which the fluid is introduced into a number of sections (15, 16) that is smaller than the total number of sections (15, 16).

4. Method according to Claim 1, 2 or 3, in which the gaseous fluid is air.

5. Method according to Claim 4, in which the fluid is dried before being introduced.

6. Method according to Claim 4 or 5, **characterized in that**, before being introduced, the fluid has a relative moisture content of at most 80%, in particular 50%, preferably 30%.

7. Method according to Claim 4, 5 or 6, in which the fluid is filtered before being introduced.

8. Method according to at least one of Claims 4 to 7, in which the fluid is introduced under a predetermined pressure which either corresponds to atmospheric pressure or is higher than atmospheric pressure.

9. Method according to at least one of the preceding Claims 4 to 8, in which the moisture content of the fluid after passing through the at least one teat cup (8) is indirectly or directly determined.

10. Milking assembly comprising
at least one milk transport line (1),
at least one fluid line (14),
a plurality of milking stations, wherein each milking station has at least one teat cup (8) which is connected directly or indirectly to the milk transport line (1) and is connectable to the fluid line (14),
and a cleaning device (10, 11, 12, 13) which is connected to the fluid line (14), wherein
the fluid line (14) has at least two sections (15, 16) which are chargeable with a gaseous fluid, **characterized in that** each section (15, 16) is in each case assigned to at least one milking station in such a manner that the at least one teat cup (8) of the milking station is connectable to the relevant section (15, 16), and **in that** means (17, 18) are provided by which at least one section (15) can be charged with the gaseous fluid independently of the at least one further section (16).

11. Milking assembly according to Claim 10, **characterized in that** the fluid is air.

12. Milking assembly according to Claim 10 or 11, **characterized in that** a drying unit (21) is provided for drying the fluid.

13. Milking assembly according to Claim 10, 11 or 12, **characterized in that** a filter unit (20) is provided through which the fluid is filtered.

14. Milking assembly according to at least one of the preceding Claims 10 to 13, **characterized in that** means are provided, the means being designed in such a manner that the moisture content of the fluid after passing through the at least one teat cup (8) is indirectly or directly determinable.

15. Milking assembly according to one of Claims 10 to 14, **characterized in that** the means (17, 18) comprise valves.

16. Milking assembly according to Claim 15, **characterized in that** the valves are actuable electromagnetically or pneumatically.

17. Milking assembly according to at least one of the preceding Claims 10 to 16, **characterized in that** a controller is provided by means of which the means (17, 18) are also controlled.

## Revendications

1. Procédé de nettoyage d'une installation de traite comprenant au moins une conduite de transport de lait (1), au moins une conduite de fluide (14), une pluralité de postes de traite, chaque poste de traite comprenant au moins un gobelet-trayeur (8) qui est relié directement ou indirectement à la conduite de transport de lait (1) et qui peut être relié à la conduite de fluide (14), et comprenant un dispositif de nettoyage (10, 11, 12, 13) qui est relié à la conduite de fluide (14), la conduite de fluide (14) comprenant au moins deux tronçons (15, 16) et au moins un poste de traite respectif étant associé à chaque tronçon (15, 16) de telle sorte que l'au moins un gobelet-trayeur (8) du poste de traite puisse être relié au tronçon (15, 16) concerné, procédé dans lequel un fluide gazeux est introduit soit dans un tronçon (15) soit dans l'autre tronçon (16).

2. Procédé selon la revendication 1, dans lequel le fluide est introduit en alternance dans un tronçon ou dans l'autre tronçon (15, 16).

3. Procédé selon la revendication 1 ou 2, dans lequel le fluide est introduit dans un nombre de tronçons (15, 16) inférieur au nombre total de tronçons (15, 16).

4. Procédé selon la revendication 1, 2 ou 3, dans lequel le fluide gazeux est de l'air.

5. Procédé selon la revendication 4, dans lequel le fluide est séché avant d'être introduit.

6. Procédé selon la revendication 4 ou 5, **caractérisé en ce que** le fluide présente, avant d'être introduit, une humidité relative d'au plus 80 %, en particulier 50 %, de préférence 30 %.

7. Procédé selon la revendication 4, 5 ou 6, dans lequel le fluide est filtré avant d'être introduit.

8. Procédé selon au moins l'une quelconque des revendications 4 à 7, dans lequel le fluide est introduit à une pression prédéfinie qui soit correspond à la pression atmosphérique, soit est supérieure à la pression atmosphérique.

9. Procédé selon au moins l'une quelconque des revendications précédentes 4 à 8, dans lequel l'humidité du fluide est déterminée directement ou indirectement après le passage de celui-ci à travers l'au moins un gobelet-trayeur (8).

10. Installation de traite, comportant
au moins une conduite de transport de lait (1),
au moins une conduite de fluide (14),
une pluralité de postes de traite, chaque poste de traite comprenant au moins un gobelet-trayeur (8) qui est relié directement ou indirectement à la conduite de transport de lait (1) et qui peut être relié à la conduite de fluide (14),
et un dispositif de nettoyage (10, 11, 12, 13) qui est relié à la conduite de fluide (14), la conduite de fluide (14) comprenant au moins deux tronçons (15, 16) qui peuvent être sollicités par un fluide gazeux,
**caractérisée en ce qu'**au moins un poste de traite respectif est associé à chaque tronçon (15, 16) de telle sorte que l'au moins un gobelet-trayeur (8) du poste de traite puisse être relié au tronçon (15, 16) concerné, et **en ce que** des moyens (17, 18) sont prévus, au moyen desquels au moins un tronçon (15) peut être sollicité par le fluide gazeux indépendamment de l'au moins un autre tronçon (16).

11. Installation de traite selon la revendication 10, **caractérisée en ce que** le fluide est de l'air.

12. Installation de traite selon la revendication 10 ou 11, **caractérisée en ce qu'**une unité de séchage (21) est prévue pour le séchage du fluide.

13. Installation de traite selon la revendication 10, 11 ou 12, **caractérisée en ce qu'**une unité filtre (20) est prévue, au moyen de laquelle le fluide est filtré.

14. Installation de traite selon au moins l'une quelconque des revendications précédentes 10 à 13, **caractérisée en ce que** des moyens sont prévus, lesquels sont réalisés de telle sorte que l'humidité du fluide puisse être déterminée directement ou indirectement après le passage de celui-ci à travers l'au moins un gobelet-trayeur (8).

15. Installation de traite selon l'une quelconque des revendications 10 à 14, **caractérisée en ce que** les moyens (17, 18) comportent des soupapes.

16. Installation de traite selon la revendication 15, **caractérisée en ce que** les soupapes peuvent être actionnées de manière électromagnétique ou pneumatique.

17. Installation de traite selon au moins l'une quelconque des revendications précédentes 10 à 16, **caractérisée en ce qu'**il est prévu une commande au moyen de laquelle les moyens (17, 18) sont également commandés.
